# EUROPÄISCHE PATENTSCHRIFT

(11) **EP 3 501 779 B1**
(45) Veröffentlichungstag und Bekanntmachung des Hinweises auf die Patenterteilung: **21.08.2024**
(21) Anmeldenummer: 18201883.8
(22) Anmeldetag: 23.10.2018
(51) Int. Cl.: B29C 43/32, B29C 65/18, B30B 15/04, B29C 73/30, B29C 65/00, B30B 15/30

(54) **VULKANISIERPRESSENTRANSPORTSYSTEM**
VULCANISATION PRESS TRANSPORT SYSTEM
SYSTÈME DE TRANSPORT DE PRESSE DE VULCANISATION

(30) Priorität: 20.12.2017 DE 102017223378
(43) Veröffentlichungstag der Anmeldung: 26.06.2019
(73) Patentinhaber: ContiTech Deutschland GmbH, 30175 Hannover (DE)
(72) Erfinder: Ständer, Tobias, 37318 Schwobfeld (DE); Möschen-Siekmann, Michael, 37176 Nörten-Hardenberg (DE)
(74) Vertreter: Continental Corporation

(56) Entgegenhaltungen:
- EP-A1- 1 306 579
- EP-A1- 2 995 442
- CN-U- 204 528 058
- DE-A1- 2 118 394
- DE-B1- 2 351 502
- DE-C- 574 202
- SU-A1- 1 106 678
- SU-A1- 765 010
- US-A- 2 069 362

## Beschreibung

Die vorliegende Erfindung betrifft ein Vulkanisierpressentransportsystem gemäß des Oberbegriffs des Patentanspruchs 1 sowie ein Transportgestell zur Verwendung in einem derartigen Vulkanisierpressentransportsystem gemäß des Patentanspruchs 11.

Zur Verbindung von mehreren Elastomerprodukten zu einem einzigen Produkt ist es üblich, die Elastomerprodukte zunächst für sich durch Vulkanisation herzustellen und anschließend an hierfür vorgesehenen Schnittstellen miteinander durch einen weiteren lokalen Vulkanisationsprozess zu verbinden. Auf diese Art und Weise können elastomere Fördergurte auf die erforderliche Länge von bis zu mehreren Kilometern gebracht sowie endlos geschlossen werden.

Hierzu können üblicherweise die Enden zweier Fördergurtteilstücke, aus denen üblicherweise die Festigkeitsträger wie z.B. Stahlseile in der Längsrichtung herausragen, aneinander gelegt werden, so dass sich ein Überlappungsbereich der Festigkeitsträger bildet. Die Festigkeitsträger können im Überlappungsbereich auch miteinander verbunden wie z.B. miteinander verspleißt werden. Anschließend kann der Überlappungsbereich mit einem elastomeren unvulkanisierten Material aufgefüllt und mittels einer Vulkanisationspresse vulkanisiert werden, so dass beide Fördergurtteilstücke zu einem einzigen Fördergurtteilstück bzw. zu einem geschlossenen Fördergurt verbunden werden.

Derartige Arbeiten müssen bei größeren Fördergurten häufig direkt vor Ort, d.h. am Einsatzort des Fördergurts, wie z.B. in einer Minenanlage ausgeführt werden, da die Fördergurte zu groß und zu schwer sind, um diese als Ganzes zum Einsatzort transportieren zu können. Ferner muss zumindest das Endlosschließen am Einsatzort durchgeführt werden.

Um dies am Einsatzort durchführen zu können, muss daher eine Vulkanisierpresse ihrerseits zum Einsatzort transportiert werden. Derartige Vulkanisierpressen können entsprechend der zu vulkanisierenden Fördergurte eine gewisse Größe, insbesondere Breite, sowie ein gewisses Gewicht aufweisen, was den Transport entsprechend aufwendig machen kann. Dies gilt insbesondere für von Verkehrswegen abgelegenen Einsatzorte.

Auch kann der Platz am Einsatzort, welcher zum Aufstellen der Vulkanisierpresse zur Verfügung steht, beschränkt sein. Dieser kann zusätzlich dadurch eingeschränkt werden, dass ein ggfs. erforderliches Transportgestell der Vulkanisierpresse am Einsatzort für die Dauer der Nutzung der Vulkanisierpresse gelagert werden muss.

Ferner ist es bisher üblich, die Einzelteile der Vulkanisierpresse als separate Packstücke zu verpacken, zu transportieren und am Einsatzort wieder zusammenzuführen. Hierbei können Einzelteile verloren gehen oder zumindest zeitverzögert am Einsatzort eintreffen, wodurch die Herstellung der Einsatzbereitschaft der Vulkanisierpresse verzögert werden kann.

Des Weiteren ist der Arbeitstisch der Vulkanisierpresse üblicherweise in der Herstellung sehr aufwendig und damit sehr teuer sowie gleichzeitig relativ instabil, so dass der Transport des Arbeitstisches zum Einsatzort und auch von dort wieder weg zu Beschädigungen mit entsprechend großen finanziellen Schaden führen kann.

Im Übrigen wird, zumindest bei größeren und schwereren Fördergurten, üblicherweise stets eine Positionierbrücke benötigt, an welcher eine Winde angeordnet werden kann, um den Fördergurt in die Vulkanisierpresse ziehen zu können. Die Positionierbrücke muss entsprechend stabil ausgebildet sein, um die dabei entstehenden Kräfte aufnehmen zu können.

Somit kann die zusätzlich erforderliche Positionierbrücke das Gewicht der Vulkanisationspresse signifikant erhöhen.

Die US 2 069 362 A beschreibt eine gefertigte Gurtverbindung und ein Verfahren zum Verbinden derselben.

Die DE 574 202 C beschreibt eine Vulkanisiervorrichtung zum Verbinden der Stoßkanten an Gummitransportbändern mit quer zur Bandkante verstellbaren Anpreßmitteln. Einschiebbare profilierte Verbindungsleisten halten die unterteilte Heizplatte in den stumpf aneinanderstoßenden Kanten zusammen und eine beliebige Anzahl von Exzenterhebelspannvorrichtungen preßt gegen die unter dem Gummitransportband befindlichen Quertraversen und Heizplatten, wobei gleichzeitig der das Band seitlich überragende Teil der oberen und unter dem Band befindlichen Heizplatte eine der Stärke des Gummibandes entsprechende, für sich geheizte planparallele Kantenleiste aufnimmt, die durch Druckschrauben einer in den Verbindungsschrauben der Quertraversen geführten Kantendrucktraverse gegen die Bandkante gepreßt wird.

Die CN 204528058 U beschreibt eine Struktur, die für geformten Stahl verwendet wird, mit einem Unterfahrgestell, wobei mehrere Ständer auf zwei T-förmigen Stahlspitzen installiert sind, mit einem Mittelteil und mit mehreren I-Stahl-Teilen, die zwischen zwei T-förmigen Stahl-teilen installiert sind, sowie einem Ständer, der von zwei T-förmigen Stahl-Teilen Symmetrien der relativen Einstellung bildet.

Die EP 2 995 442 A1 beschreibt eine Vulkanisierpresse mit übereinander angeordneten und unter Zwischenlage des Vulkanisiergutes aufeinander zu beweglich angeordneten unteren und oberen Druckplatten und einer Einrichtung zur Beheizung mindestens einer der Druckplatten während des Vulkanisierprozesses, wobei die untere Druckplatte statisch fest angeordnet ist, die obere Druckplatte mittels einer Hebeeinrichtung anhebbar ausgebildet ist, und die Oberseite der oberen Druckplatte für das Auflegen von Gewichtslasten als eine nach oben offene Lastträgerfläche ausgebildet ist.

Weiterhin ist aus der EP 1 306 579 A1 eine Verbindungspresse zum Verbinden eines ersten und zweiten freien Endes von einem oder mehrerer Gurte, die zwei Handgriffgriffe aufweist, bekannt. Eine Aufgabe der vorliegenden Erfindung ist es, den Transport und bzw. oder den Einsatz einer Vulkanisierpresse der eingangs beschriebenen Art zu verbessern. Insbesondere soll Gewicht beim Transport und bzw. oder Platz am Einsatzort gespart werden. Zumindest soll eine Alternative zu bekannten Vulkanisierpressentransportsystemen geschaffen werden.

Die Aufgabe wird erfindungsgemäß durch ein Vulkanisierpressentransportsystem mit den Merkmalen gemäß Patentanspruch 1 sowie durch ein Transportgestell mit den Merkmalen gemäß Patentanspruch 11 gelöst. Vorteilhafte Weiterbildungen sind in den Unteransprüchen beschrieben.

Somit betrifft die vorliegende Erfindung ein Vulkanisierpressentransportsystem mit einer Vulkanisierpresse mit wenigstens einer Pressentraverse, vorzugsweise einem Paar von Pressentraversen, zur Aufnahme wenigstens einer Heizplatte, und mit einem Transportgestell, welches ausgebildet ist, die Vulkanisierpresse zum Transport aufzunehmen, wobei das Vulkanisierpressentransportsystem ausgebildet ist, so dass die Vulkanisierpresse in einem Transportzustand von dem Transportgestell transportiert und in einem Betriebszustand ein Fördergurt zumindest abschnittsweise mittels der Vulkanisierpresse vulkanisieren werden kann.

Das Vulkanisierpressentransportsystem ist dadurch gekennzeichnet, dass das Transportgestell einen Grundrahmen aufweist, welcher ausgebildet ist, im Betriebszustand der Vulkanisierpresse als Positionierbrücke des Fördergurtes verwendet zu werden. Auf diese Weise kann während des Transports sowie am Einsatzort Platz und Gewicht gespart werden. Auch der empfindliche Pressentisch bzw. dessen Pressentraversen sicher transportiert werden. Ferner kann die Logistik vereinfacht werden, indem diese Elemente gemeinsam transportiert werden können. Hierdurch kann eine flache und ausreichend massive Positionierbrücke geschaffen werden, um diese Aufgabe zu erfüllen.

Gemäß einem Aspekt der vorliegenden Erfindung weist das Transportgestell einen Grundrahmen sowie eine Mehrzahl von Stegen auf, wobei die Stege an dem Grundrahmen entfernbar abgeordnet werden können, so dass die Stege im Transportzustand des Vulkanisierpressentransportsystems senkrecht nach oben zeigend an dem Grundrahmen angeordnet werden können, um die Vulkanisierpresse zwischen sich aufzunehmen, und im Betriebszustand des Vulkanisierpressentransportsystems von dem Grundrahmen entfernt werden können. Hierdurch können von dem Transportgestell beide Aufgaben erfüllt werden.

Gemäß einem weiteren Aspekt der vorliegenden Erfindung weist die Vulkanisierpresse wenigstens auf einer Seite, vorzugsweise auf beiden Seiten, in der Bewegungsrichtung des Fördergurtes wenigstens einen Tisch, vorzugsweise eine Mehrzahl von Tischen, auf, wobei der Tisch wenigstens einen Tischfuß und wenigstens eine Tischabschrägung aufweist, wobei der Tischfuß und die Tischabschrägung einteilig und gegeneinander drehbeweglich ausgebildet sind. Hierdurch können der Tischfuß und die Tischabschrägung gemeinsam gehandhabt werden, was die Montage vereinfachen kann. Auch kann die Positionierung der beiden Elemente zueinander im verbundenen Zustand einfach und definiert erfolgen.

Gemäß einem weiteren Aspekt der vorliegenden Erfindung sind der Tischfuß und die Tischabschrägung gegeneinander verschwenkbar ausgebildet. Hierdurch kann eine einfache, definierte und haltbare Beweglichkeit umgesetzt werden.

Gemäß einem weiteren Aspekt der vorliegenden Erfindung sind der Tischfuß und die Tischabschrägung mittels eines Scharniers miteinander verbunden. Hierdurch kann die Beweglichkeit einfach, robust, kostengünstig und haltbar umgesetzt werden.

Gemäß einem weiteren Aspekt der vorliegenden Erfindung sind der Tischfuß und die Tischabschrägung zusammensteckbar ausgebildet. Mit anderen Worten sind der Tischfuß und die Tischabschrägung als separate Elemente ausgebildet, welcher durch Zusammenstecken miteinander verbunden und bestimmungsgemäß verwendet werden können. Das Zusammenstecken kann durch geeignete mechanische Mittel wie z.B. korrespondierende Vorsprünge und Aussparungen, Haken und Stege und dergleichen erfolgen. Auf diese Art und Weisen können der Tischfuß und die Tischabschrägung z.B. zum Transport auseinander genommen und zum Betrieb bzw. zum Aufbau der betriebsbereiten Vulkanisierpresse zusammengesteckt werden, so dass die Stabilität verbessert und bzw. oder der Aufbau vereinfacht werden können.

Gemäß einem weiteren Aspekt der vorliegenden Erfindung sind wenigstens eine Tischabschrägung der Vulkanisierpresse und wenigstens ein Steg des Transportgestells ausgebildet, so dass die Tischabschrägung im Transportzustand des Vulkanisierpressentransportsystems zumindest abschnittsweise, vorzugsweise vollständig, von dem Steg, vorzugsweise in dem Steg, aufgenommen werden kann. Hierdurch kann die Tischabschrägung während des Transports platzsparend angeordnet werden. Gleichzeitig kann die Tischabschrägung während des Transports geschützt werden. Dies kann auch für ein Gelenk, Scharnier oder dergleichen gelten, über welches die Tischabschrägung mit einem Tischfuß verbunden sein kann.

Gemäß einem weiteren Aspekt der vorliegenden Erfindung sind wenigstens ein Tischfuß der Vulkanisierpresse und wenigstens ein Steg des Transportgestells ausgebildet, so dass der Tischfuß im Transportzustand des Vulkanisierpressentransportsystems den Steg verlängern kann. Auf diese Art und Weise kann der Tischfuß in beiden Zuständen genutzt werden. Der Steg kann daher kürzer und leichter ausgebildet werden.

Gemäß einem weiteren Aspekt der vorliegenden Erfindung weist der Tisch ferner wenigstens eine Tischauflage auf, wobei die Tischauflage ausgebildet ist, im Transportzustand des Vulkanisierpressentransportsystems zwischen zwei Stegen des Transportgestells und im Betriebszustand des Vulkanisierpressentransportsystems zwischen eine Pressentraversen und einem Tischfuß der Vulkanisierpresse angeordnet zu werden. Hierdurch kann ein Tisch geschaffen werden. Gleichzeitig kann die hierfür erforderliche Tischauflage während des Transports platzsparend angeordnet werden.

Gemäß einem weiteren Aspekt der vorliegenden Erfindung weist der Tisch ferner wenigstens eine Tischplatte auf, wobei die Tischplatte ausgebildet ist, im Transportzustand des Vulkanisierpressentransportsystems auf der Pressentraverse, vorzugsweise zwischen zwei Pressentraversen, der Vulkanisierpresse und im Betriebszustand des Vulkanisierpressentransportsystems auf wenigstens zwei Tischauflagen der Vulkanisierpresse angeordnet zu werden. Hierdurch kann ein Tisch geschaffen werden. Gleichzeitig kann die hierfür erforderliche Tischplatte während des Transports platzsparend angeordnet werden.

Die vorliegende Erfindung betrifft auch ein Transportgestell zur Verwendung in einem Vulkanisierpressentransportsystem wie zuvor beschrieben. Durch ein derartiges Transportgestell kann ein derartiges Vulkanisierpressentransportsystem geschaffen und dessen Eigenschaften und Vorteile umgesetzt und genutzt werden.

Ein Ausführungsbeispiel und weitere Vorteile der Erfindung werden nachstehend im Zusammenhang mit den folgenden Figuren erläutert. Darin zeigt:
- Fig. 1: eine perspektivische schematische Darstellung eines erfindungsgemäßen Vulkanisierpressentransportsystems im Transportzustand;
- Fig. 2: eine perspektivische schematische Darstellung einer erfindungsgemäßen Vulkanisierpresse im Betriebszustand; und
- Fig. 3: eine perspektivische schematische Darstellung einer erfindungsgemäßen Transportgestells im Betriebszustand.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z. Die Längsrichtung X kann auch als Tiefe X, die Querrichtung Y auch als Breite Y und die vertikale Richtung Z auch als Höhe Z bezeichnet werden.

Ein erfindungsgemäßes Vulkanisierpressentransportsystem 1, 2 weist eine erfindungsgemäße Vulkanisierpresse 1 und ein erfindungsgemäßes Transportgestell 2 auf.

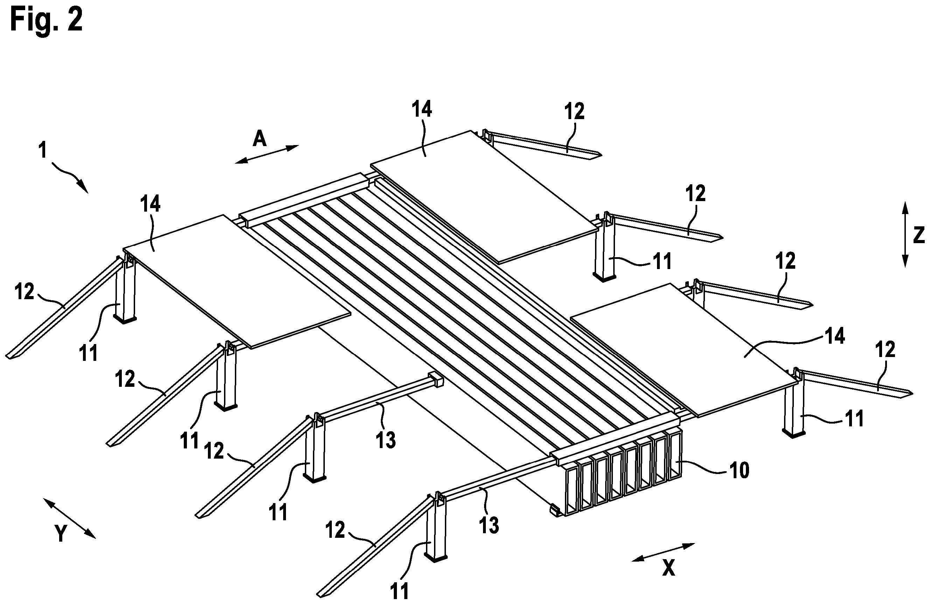

Die Vulkanisierpresse 1 weist ein Paar von Pressentraversen 10 auf, dessen untere Pressentraverse 10 in einem Betriebszustand der Vulkanisierpresse 1 als stabiler Untergrund beim Vulkanisierprozess dienen kann, siehe Figur 2. Zwischen den beiden Pressentraversen 10, welche im Betriebszustand der Vulkanisierpresse 1 entlang der Querrichtung Y parallel zueinander ausgerichtet sind, können Heizplatten und andere Elemente angeordnet werden, um den zu vulkanisierenden Fördergurt dort zu positionieren und zu vulkanisieren.

Um den zu vulkanisierenden Fördergurt vorbereiten und den Pressentraversen 10 in einer Bewegungsrichtung A zuführen zu können, sind beidseitig der Pressentraversen 10 in der Bewegungsrichtung A bzw. in der Längsrichtung X Tische 11, 12, 13, 14 angeordnet, siehe Figur 2. Die Tische 11, 12, 13, 14 werden durch mehrere Tischfüße 11 gebildet, welche im Betriebszustand der Vulkanisierpresse 1 senkrecht auf dem Untergrund aufstehen. In der Horizontalen werden die Tischfüße 11 in der Längsrichtung X durch jeweils eine Tischauflage 13 mit der unteren Pressentraversen 10 verbunden. Die Tischauflage 13 kann als einzelne Strebe oder als Rahmen in einer Länge oder segmentiert ausgebildet sein. Auf jeweils einem Paar unmittelbar zueinander benachbarter Tischauflagen 13 wird jeweils eine Tischplatte 14 angeordnet, so dass der Fördergurt horizontal und sowohl zum Untergrund in der Höhe Z beabstandet als auch zu der Durchführung zwischen den beiden Pressentraversen 10 ausgerichtet z.B. durch Verspleißen für die anschließende Vulkanisation vorbereitet werden kann. Den Tischauflagen 13 abgewandt weist jeder Tischfuß 11 eine Tischabschrägung 12 auf, welche schräg nach unten zeigend angeordnet ist, so dass der Fördergurt der Vulkanisierpresse 1 von der einen Seite von dem Untergrund zugeführt und auf der gegenüberliegenden Seite auf den Untergrund abgelegt werden kann.

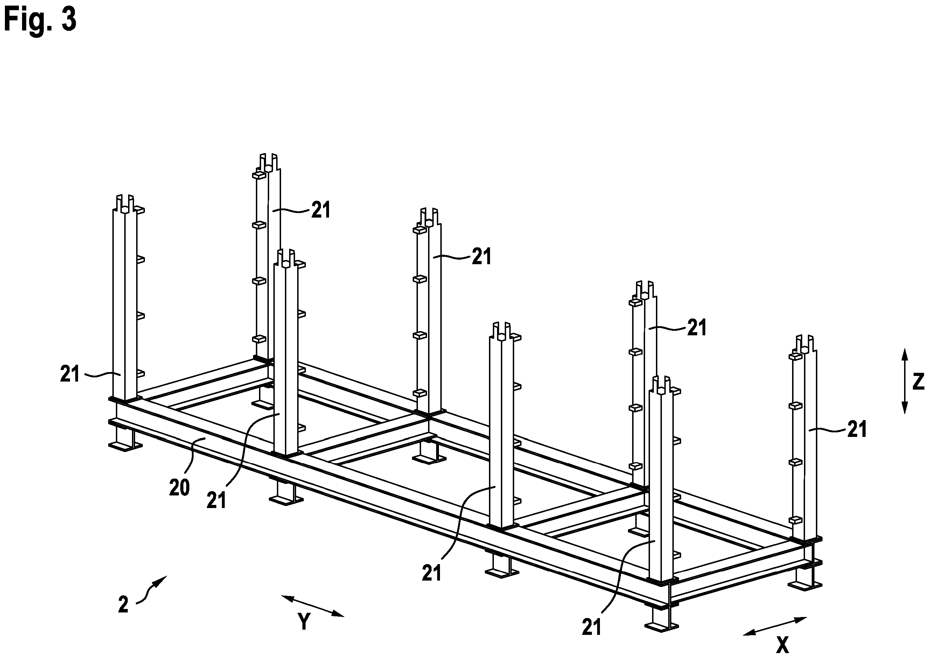

Das Transportgestell 2 weist einen Grundrahmen 20 auf, welcher rechteckig in der horizontalen Ebene ausgebildet ist, siehe Figur 3. In der Höhe Z können mehrere Stege 21 auf jeweils einer Aufsteckvorrichtung (nicht dargestellt) in einem Transportzustand von oben auf dem Grundrahmen 20 aufgenommen werden, welche im Betriebszustand abgenommen und separat gelagert werden können.

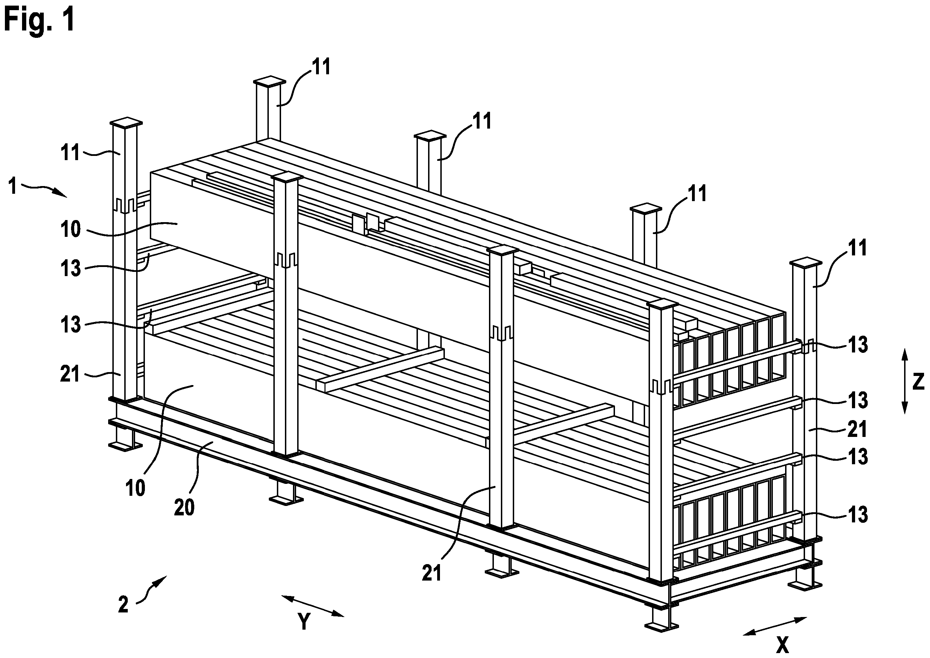

Das erfindungsgemäße Vulkanisierpressentransportsystem 1, 2 kann derart verwendet werden, dass die einzelnen Elemente der Vulkanisierpresse 1 gemäß der Figur 2, wie zuvor erläutert, in dem Transportzustand von dem Transportgestell 2 wie in der Figur 1 dargestellt aufgenommen werden. Somit können die beiden Pressentraversen 10 sich jeweils in der Querrichtung Y erstreckend zwischen den Stegen 21 des Transportgestells 2 in der Längsrichtung X angeordnet werden. Die obere Pressentraverse 10 kann dabei von Halterungen der Stege 21 des Transportgestells 2 gehalten werden, siehe Figur 1, so dass zwischen den beiden Pressentraversen 10 die Tischplatten 14 sowie weitere Elemente der Vulkanisierpresse 1 wie z.B. die verpackten Heizplatten angeordnet werden können. Die Tischauflagen 13 können in der Längsrichtung X zwischen den seitlich äußeren Stegen 21 des Transportgestells 2 mittels entsprechender Halterungen gehalten werden (nicht dargestellt).

Die Tischfüße 11 sind jeweils mit der entsprechenden Tischabschrägung 12 durch ein Scharnier drehbeweglich verbunden. Alternativ können die Tischfüße 11 und die Tischabschrägungen 12 auch zweiteilig und zusammensteckbar ausgebildet sein. Ferner sind die Tischabschrägungen 12 derart ausgebildet, so dass sie in der Höhe Z von oben von den Stegen 21 des Transportgestells 2 im Transportzustand ausgenommen werden können. Hierdurch können die Tischabschrägungen 12 platzsparend für den Transport verstaut werden.

Ferner sind die Tischfüße 11 und die Tischabschrägungen 12 der Vulkanisierpresse 1 sowie die Stege 21 des Transportgestells 2 ausgebildet, so dass die Tischfüße 11 in Transportzustand senkrecht in der Höhe Z nach oben ragen und feststehend von den Stegen 21 des Transportgestells 2 gehalten werden können, so dass die Stege 21 des Transportgestells 2 in Transportzustand senkrecht in der Höhe Z nach oben von den Tischfüßen 11 der Vulkanisierpresse 1 verlängert werden. Hierdurch können die Tischfüße 11 der Vulkanisierpresse 1 zum einen platzsparend transportiert werden. Zum anderen können die Stege 21 des Transportgestells 2, welche lediglich für den Transportzustand verwendet werden, kürzer und damit leichter ausfallen.

In dem Betriebszustand des Vulkanisierpressentransportsystems 1, 2 können die Stege 21 des Transportgestells 2 abgenommen und der Grundrahmen 20 des Transportgestells 2 in der Bewegungsrichtung A des Fördergurtes vor der Vulkanisierpresse 1 auf dem Untergrund angeordnet werden, um in diesem Zustand als Positionierbrücke zur Befestigung einer Winde verwendet zu werden.

Somit können erfindungsgemäß alle Elemente des Vulkanisierpressentransportsystems 1, 2 bis auf die Stege 21 des Transportgestells 2 sowohl im Betriebszustand als auch im Transportzustand verwendet werden. Auf diese Art und Weise kann ein sicherer, zusammengehörender und kompakter Transport mit möglichst geringem Gewicht erfolgen. Gleichzeitig kann am Einsatzort Platz gespart werden.

### Bezugszeichenliste (Teil der Beschreibung)

- A: Bewegungsrichtung des Fördergurtes
- X: Längsrichtung; Tiefe
- Y: Querrichtung; Breite
- Z: vertikale Richtung; Höhe

- 1: Vulkanisierpresse
- 10: Pressentraversen
- 11: Tischfüße
- 12: Tischabschrägungen; Balken zum Abböschen
- 13: Tischauflagen
- 14: Tischplatten; Arbeitstischpaletten

- 2: Transportgestell
- 20: Grundrahmen
- 21: Stege

## Patentansprüche

1. Vulkanisierpressentransportsystem (1, 2)
mit einer Vulkanisierpresse (1) mit
wenigstens einer Pressentraverse (10), vorzugsweise einem Paar von Pressentraversen (10), zur Aufnahme wenigstens einer Heizplatte, und
mit einem Transportgestell (2), welches ausgebildet ist, die Vulkanisierpresse (1) zum Transport aufzunehmen,
wobei das Vulkanisierpressentransportsystem (1, 2) ausgebildet ist, so dass die Vulkanisierpresse (1) in einem Transportzustand von dem Transportgestell (2) transportiert und in einem Betriebszustand ein Fördergurt zumindest abschnittsweise mittels der Vulkanisierpresse (1) vulkanisieren werden kann,
**dadurch gekennzeichnet, dass**
das Transportgestell (2) einen Grundrahmen (20) aufweist, welcher ausgebildet ist, im Betriebszustand der Vulkanisierpresse (1) als Positionierbrücke des Fördergurtes verwendet zu werden.

2. Vulkanisierpressentransportsystem (1, 2) nach Anspruch 1, **dadurch gekennzeichnet, dass**
das Transportgestell (2) einen Grundrahmen (20) sowie eine Mehrzahl von Stegen (21) aufweist,
wobei die Stege (21) an dem Grundrahmen (20) entfernbar abgeordnet werden können, so dass die Stege (21) im Transportzustand des Vulkanisierpressentransportsystems (1, 2) senkrecht nach oben zeigend an dem Grundrahmen (20) angeordnet werden können, um die Vulkanisierpresse (1) zwischen sich aufzunehmen, und im Betriebszustand des Vulkanisierpressentransportsystems (1, 2) von dem Grundrahmen (20) entfernt werden können.

3. Vulkanisierpressentransportsystem (1, 2) nach einem der vorherigen Ansprüche,
**dadurch gekennzeichnet, dass**
die Vulkanisierpresse (1) wenigstens auf einer Seite, vorzugsweise auf beiden Seiten, in der Bewegungsrichtung des Fördergurtes wenigstens einen Tisch (11, 12, 13, 14), vorzugsweise eine Mehrzahl von Tischen (11, 12, 13, 14), aufweist,
wobei der Tisch (11, 12, 13, 14) wenigstens einen Tischfuß (11) und wenigstens eine Tischabschrägung (12) aufweist,
wobei der Tischfuß (11) und die Tischabschrägung (12) einteilig und gegeneinander drehbeweglich ausgebildet sind.

4. Vulkanisierpressentransportsystem (1, 2) nach Anspruch 3, **dadurch gekennzeichnet, dass**
der Tischfuß (11) und die Tischabschrägung (12) gegeneinander verschwenkbar ausgebildet sind.

5. Vulkanisierpressentransportsystem (1, 2) nach Anspruch 3 oder 4, **dadurch gekennzeichnet, dass**
der Tischfuß (11) und die Tischabschrägung (12) mittels eines Scharniers miteinander verbunden sind.

6. Vulkanisierpressentransportsystem (1, 2) nach Anspruch 3, **dadurch gekennzeichnet, dass**
der Tischfuß (11) und die Tischabschrägung (12) zusammensteckbar ausgebildet sind.

7. Vulkanisierpressentransportsystem (1, 2) nach einem der Ansprüche 3 bis 6,
**dadurch gekennzeichnet, dass**
wenigstens eine Tischabschrägung (12) der Vulkanisierpresse (1) und wenigstens ein Steg (21) des Transportgestells (2) ausgebildet sind, so dass die Tischabschrägung (21) im Transportzustand des Vulkanisierpressentransportsystems (1, 2) zumindest abschnittsweise, vorzugsweise vollständig, von dem Steg (21), vorzugsweise in dem Steg (21), aufgenommen werden kann.

8. Vulkanisierpressentransportsystem (1, 2) nach einem der Ansprüche 3 bis 7,
**dadurch gekennzeichnet, dass**
wenigstens ein Tischfuß (11) der Vulkanisierpresse (1) und wenigstens ein Steg (21) des Transportgestells (2) ausgebildet sind, so dass der Tischfuß (11) im Transportzustand des Vulkanisierpressentransportsystems (1, 2) den Steg (21) verlängern kann.

9. Vulkanisierpressentransportsystem (1, 2) nach einem der Ansprüche 3 bis 8,
**dadurch gekennzeichnet, dass**
der Tisch (11, 12, 13, 14) ferner wenigstens eine Tischauflage (13) aufweist,
wobei die Tischauflage (13) ausgebildet ist, im Transportzustand des Vulkanisierpressentransportsystems (1, 2) zwischen zwei Stegen (21) des Transportgestells (2) und im Betriebszustand des Vulkanisierpressentransportsystems (1, 2) zwischen eine Pressentraversen (10) und einem Tischfuß (11) der Vulkanisierpresse (1) angeordnet zu werden.

10. Vulkanisierpressentransportsystem (1, 2) nach Anspruch 9, **dadurch gekennzeichnet, dass**
der Tisch (11, 12, 13, 14) ferner wenigstens eine Tischplatte (14) aufweist,
wobei die Tischplatte (14) ausgebildet ist, im Transportzustand des Vulkanisierpressentransportsystems (1, 2) auf der Pressentraverse (10), vorzugsweise zwischen zwei Pressentraversen (10), der Vulkanisierpresse (1) und im Betriebszustand des Vulkanisierpressentransportsystems (1, 2) auf wenigstens zwei Tischauflagen (13) der Vulkanisierpresse (1) angeordnet zu werden.

11. Transportgestell (2) zur Verwendung in einem Vulkanisierpressentransportsystem (1, 2) nach einem der Ansprüche 1 bis 10.

## Claims

1. Vulcanizing-press transport system (1, 2)
having a vulcanizing press (1) with
at least one press crossmember (10), preferably a pair of press crossmembers (10), for accommodating at least one heating plate, and
with a transport framework (2) which is configured to accommodate the vulcanizing press (1) for transport,
wherein the vulcanizing-press transport system (1,2) is configured such that, in a transport state, the vulcanizing press (1) can be transported by the transport framework (2) and, in an operational state, a conveyor belt can be vulcanized at least sectionally by means of the vulcanizing press (1),
**characterized in that**
the transport framework (2) has a basic frame (20) which is configured to be used as a positioning bridge of the conveyor belt in the operational state of the vulcanizing press (1).

2. Vulcanizing-press transport system (1, 2) according to Claim 1, **characterized in that**
the transport framework (2) has a basic frame (20) and a plurality of webs (21), wherein the webs (21) can be arranged in a removable manner on the basic frame (20) such that the webs (21), in the transport state of the vulcanizing-press transport system (1, 2), can be arranged on the basic frame (20) so as to point vertically upwards in order to accommodate the vulcanizing press (1) between them and, in the operational state of the vulcanizing-press transport system (1,2), can be removed from the basic frame (20).

3. Vulcanizing-press transport system (1, 2) according to either of the preceding claims, **characterized in that**
the vulcanizing press (1) has at least one table (11, 12, 13, 14), preferably a plurality of tables (11, 12, 13, 14), at least on one side, preferably on both sides, in the direction of movement of the conveyor belt,
wherein the table (11, 12, 13, 14) has at least one table leg (11) and at least one sloping table portion (12),
wherein the table leg (11) and the sloping table portion (12) are formed integrally and so as to be rotatable in relation to one another.

4. Vulcanizing-press transport system (1, 2) according to Claim 3, **characterized in that**
the table leg (11) and the sloping table portion (12) are formed so as to be pivotable in relation to one another.

5. Vulcanizing-press transport system (1, 2) according to Claim 3 or 4,
**characterized in that**
the table leg (11) and the sloping table portion (12) are connected to one another by means of a hinge.

6. Vulcanizing-press transport system (1, 2) according to Claim 3, **characterized in that**
the table leg (11) and the sloping table portion (12) are formed so as to be able to be plugged together.

7. Vulcanizing-press transport system (1, 2) according to one of Claims 3 to 6, **characterized in that**
at least one sloping table portion (12) of the vulcanizing press (1) and at least one web (21) of the transport framework (2) are formed such that, in the transport state of the vulcanizing-press transport system (1, 2), the sloping table portion (12) can be accommodated at least sectionally, preferably completely, by the web (21), preferably in the web (21).

8. Vulcanizing-press transport system (1, 2) according to one of Claims 3 to 7, **characterized in that**
at least one table leg (11) of the vulcanizing press (1) and at least one web (21) of the transport framework (2) are formed such that, in the transport state of the vulcanizing-press transport system (1, 2), the table leg (11) can extend the web (21).

9. Vulcanizing-press transport system (1, 2) according to one of Claims 3 to 8, **characterized in that**
the table (11, 12, 13, 14) furthermore has at least one table support (13), wherein the table support (13) is configured to be arranged between two webs (21) of the transport framework (2) in the transport state of the vulcanizing-press transport system (1, 2) and between a press crossmember (10) and a table leg (11) of the vulcanizing press (1) in the operational state of the vulcanizing-press transport system (1, 2).

10. Vulcanizing-press transport system (1, 2) according to Claim 9, **characterized in that**
the table (11, 12, 13, 14) furthermore has at least one table top (14),
wherein the table top (14) is configured to be arranged on the press crossmember (10), preferably between two press crossmembers (10), of the vulcanizing press (1) in the transport state of the vulcanizing-press transport system (1, 2) and on at least two table supports (13) of the vulcanizing press (1) in the operational state of the vulcanizing-press transport system (1, 2).

11. Transport framework (2) for use in a vulcanizing-press transport system (1, 2) according to one of Claims 1 to 10.

## Revendications

1. Système de transport de presse de vulcanisation (1, 2)
avec une presse de vulcanisation (1) avec
au moins une traverse de presse (10), de préférence une paire de traverses de presse (10), pour recevoir au moins une plaque chauffante, et
avec un châssis de transport (2), qui est configuré pour recevoir la presse de vulcanisation (1) pour le transport,
le système de transport de presse de vulcanisation (1, 2) étant configuré de telle sorte que la presse de vulcanisation (1) peut être transportée par le châssis de transport (2) dans un état de transport et qu'une courroie de transport peut être vulcanisée au moins par sections au moyen de la presse de vulcanisation (1) dans un état de fonctionnement,
**caractérisé en ce que**
le châssis de transport (2) présente un cadre de base (20) qui est configuré pour être utilisé en tant que pont de positionnement de la courroie de transport dans l'état de fonctionnement de la presse de vulcanisation (1).

2. Système de transport de presse de vulcanisation (1, 2) selon la revendication 1, **caractérisé en ce que**
le châssis de transport (2) présente un cadre de base (20) ainsi qu'une pluralité d'entretoises (21),
les entretoises (21) pouvant être agencées de manière amovible sur le cadre de base (20), de telle sorte que les entretoises (21) peuvent être agencées sur le cadre de base (20) en étant orientées verticalement vers le haut dans l'état de transport du système de transport de presse de vulcanisation (1, 2) pour recevoir la presse de vulcanisation (1) entre elles, et peuvent être retirées du cadre de base (20) dans l'état de fonctionnement du système de transport de presse de vulcanisation (1, 2).

3. Système de transport de presse de vulcanisation (1, 2) selon l'une quelconque des revendications précédentes, **caractérisé en ce que**
la presse de vulcanisation (1) présente au moins sur un côté, de préférence sur les deux côtés, dans la direction de déplacement de la courroie de transport, au moins une table (11, 12, 13, 14), de préférence une pluralité de tables (11, 12, 13, 14),
la table (11, 12, 13, 14) présentant au moins un pied de table (11) et au moins un biseau de table (12),
le pied de table (11) et le biseau de table (12) étant réalisés d'une seule pièce et étant configurés sous forme mobile en rotation l'un par rapport à l'autre.

4. Système de transport de presse de vulcanisation (1, 2) selon la revendication 3, **caractérisé en ce que**
le pied de table (11) et le biseau de table (12) sont configurés de manière à pouvoir pivoter l'un par rapport à l'autre.

5. Système de transport de presse de vulcanisation (1, 2) selon la revendication 3 ou 4, **caractérisé en ce que**
le pied de table (11) et le biseau de table (12) sont reliés entre eux au moyen d'une charnière.

6. Système de transport de presse de vulcanisation (1, 2) selon la revendication 3, **caractérisé en ce que**
le pied de table (11) et le biseau de table (12) sont configurés de manière à pouvoir être assemblés.

7. Système de transport de presse de vulcanisation (1, 2) selon l'une quelconque des revendications 3 à 6, **caractérisé en ce que**
au moins un biseau de table (12) de la presse de vulcanisation (1) et au moins une entretoise (21) du châssis de transport (2) sont configurés de telle sorte que le biseau de table (21) peut être reçu au moins par sections, de préférence entièrement, par l'entretoise (21), de préférence dans l'entretoise (21), dans l'état de transport du système de transport de presse de vulcanisation (1, 2).

8. Système de transport de presse de vulcanisation (1, 2) selon l'une quelconque des revendications 3 à 7, **caractérisé en ce que**
au moins un pied de table (11) de la presse de vulcanisation (1) et au moins une entretoise (21) du châssis de transport (2) sont configurés de telle sorte que le pied de table (11) peut prolonger l'entretoise (21) dans l'état de transport du système de transport de presse de vulcanisation (1, 2).

9. Système de transport de presse de vulcanisation (1, 2) selon l'une quelconque des revendications 3 à 8, **caractérisé en ce que**
la table (11, 12, 13, 14) présente en outre au moins un support de table (13), le support de table (13) étant configuré pour être agencé, à l'état de transport du système de transport de presse de vulcanisation (1, 2), entre deux traverses (21) du châssis de transport (2) et, à l'état de fonctionnement du système de transport de presse de vulcanisation (1, 2), entre une traverse de presse (10) et un pied de table (11) de la presse de vulcanisation (1).

10. Système de transport de presse de vulcanisation (1, 2) selon la revendication 9, **caractérisé en ce que**
la table (11, 12, 13, 14) présente en outre au moins un plateau de table (14),
le plateau de table (14) étant configuré pour être agencé, à l'état de transport du système de transport de presse de vulcanisation (1, 2), sur la traverse de presse (10), de préférence entre deux traverses de presse (10), de la presse de vulcanisation (1) et, à l'état de fonctionnement du système de transport de presse de vulcanisation (1, 2), sur au moins deux supports de table (13) de la presse de vulcanisation (1).

11. Châssis de transport (2) pour utilisation dans un système de transport de presse de vulcanisation (1, 2) selon l'une quelconque des revendications 1 à 10.
